# EUROPÄISCHE PATENTSCHRIFT

(11) **EP 2 213 918 B1**
(45) Veröffentlichungstag und Bekanntmachung des Hinweises auf die Patenterteilung: **21.08.2019**
(21) Anmeldenummer: 10152224.1
(22) Anmeldetag: 01.02.2010
(51) Int. Cl.: F16K 11/074, F16K 31/56

(54) **Sanitäres Abschalt- beziehungsweise Umschaltventil**
Sanitary switch-off or switching valve
Soupape de commutation ou d'arrêt sanitaire

(30) Priorität: 02.02.2009 DE 102009008194
(43) Veröffentlichungstag der Anmeldung: 04.08.2010
(73) Patentinhaber: Hansgrohe SE, 77761 Schiltach (DE)
(72) Erfinder: Melle, Fabian, 77770 Durbach (DE)
(74) Vertreter: Patentanwälte Ruff, Wilhelm, Beier, Dauster & Partner mbB

(56) Entgegenhaltungen:
- DE-A1- 1 750 380
- DE-A1- 2 147 187
- DE-A1-102006 018 673
- DE-C1- 10 137 611
- GB-A- 949 108
- US-A- 802 954
- US-A- 5 433 384
- US-B1- 6 622 945
- US-B2- 7 341 239

## Beschreibung

Die Erfindung betrifft ein sanitäres Ventil, wie es beispielsweise in Sanitärarmaturen verwendbar ist. Bei dem Ventil kann es sich sowohl um ein Abschaltventil als auch um ein Umschaltventil zwischen zwei oder mehr Auslässen handeln.

Bei Sanitärarmaturen tritt häufig das Problem auf, das zwischen zwei Auslässen umgeschaltet werden soll, beispielsweise zwischen einem zu einer Wanne führenden Auslass oder einem zu einer Handbrause führenden Auslass. Die Umschaltung zwischen zwei Auslässen kann auch innerhalb einer Handbrause vorgesehen sein. Hierzu sind Armaturen bekannt, die ein Ventil aufweisen, das mithilfe eines Hebels oder eines Umschaltknopfs betätigt wird. Bekannt sind Hebel zum Verschwenken und Knöpfe, die entweder gedrückt und gezogen oder auch verdreht werden.

Bei einem in der Offenlegungsschrift DE 21 47 187 A1 beschriebenen Drucktastenventil wird eine Ventilspindel mit einem einstückig verbundenen Ventilschließkörper verwendet. Durch Betätigen einer Drucktaste wird die Ventilspindel entsprechend der Betätigungsrichtung der Drucktaste zwischen zwei axialen Stellungen vor- beziehungsweise zurückbewegt, wobei der Ventilschließkörper in einer Endstellung gegen eine Ringscheibe angedrückt wird und somit einen Wasserfluss blockiert.

Die Patentschrift DE 101 37 611 C1 offenbart eine Umstellvorrichtung für eine Sanitäreinrichtung mit mindestens zwei Wasserverbrauchern, wobei die Umstellvorrichtung ein Gehäuse mit einem Einlass und mindestens zwei Auslässen sowie eine Umstellventileinrichtung und eine Absperrventileinrichtung beinhaltet. Die Umstellventileinrichtung verbindet den Einlass wahlweise mit einem der Auslässe und besitzt hierzu als Ventilkörper eine verdrehbar gegen eine feststehende Grundscheibe anliegende Steuerscheibe. Die Absperrventileinrichtung unterbricht wahlweise den Wasserdurchfluss durch die Umstellventileinrichtung und umfasst eine an der Steuerscheibe anliegende Stoppscheibe, die sich mit der Steuerscheibe mitverdreht und zusätzlich eine Relativbewegung gegenüber der Steuerscheibe ausführen kann. Ein zugehöriger Betätigungsmechanismus verdreht bei jeder Betätigung die Stoppscheibe um den gleichen Winkel stets in der gleichen Richtung und beinhaltet ein unter axialem Druck bewegliches Teil sowie einen dessen Bewegung in eine Verdrehung der Stoppscheibe umsetzenden Kulissenmechanismus. Das axial bewegliche Teil kann insbesondere eine zusätzlich verdrehbare Ventilspindel sein, die mit der Steuerscheibe in Drehverbindung steht.

### Neue Beschreibunqsseiten 2 und 3

Weitere herkömmliche sanitäre Abschalt- bzw. Umschaltventile sind in den Offenlegungsschriften DE 10 2006 018 673 A1 und DE 1 750 380 sowie den Patentschriften GB 949 108, US 5 433 384, US 6 622 945 B1, US 802 954 und US 7 341 239 B2 offenbart.

Der Erfindung liegt die Aufgabe zu Grunde, ein Ventil vorzuschlagen, das bei einfachem und Platz sparendem Aufbau sehr einfach zum Abschalten eines Auslasses beziehungsweise bei mehreren Auslässen zum Umschalten zwischen diesen Auslässen benutzt werden kann.

Zur Lösung dieser Aufgabe schlägt die Erfindung ein sanitäres Ventil mit den im Anspruch 1 genannten Merkmalen vor. Weiterbildungen der Erfindung sind Gegenstand von Unteransprüchen.

Während bei den bisher bekannten Umschaltventilen die Umschaltung durch Verschwenken eines Hebels, also hin und her, erfolgt, wird jetzt ein Abschalten oder Umschalten durch ein zyklisches Weiterschalten bewirkt. Diese Art der Betätigung kann insbesondere bei nassen oder eingeseiften Händen einfacher sein als das Verschwenken eines Hebels oder das Ziehen eines Zugknopfs. Bei einem Weiterschalten sind auch keine Endstellungen nötig, an denen ein Ventilelement anschlägt, was bei dauernden Fehlbedienungen auch zu Abnutzungserscheinungen führen kann.

Die Bewegung des Ventilschließkörpers setzt sich erfindungsgemäß aus einer Hubbewegung und einer Drehbewegung zusammen. Die Drehbewegung kann insbesondere eine Drehbewegung um eine feste Achse sein, so dass sich die verschiedenen stabilen Positionen des Ventilschließkörpers durch eine unterschiedliche Winkelposition kennzeichnen. Die Verdrehung des Ventilschließkörpers eignet sich insbesondere für eine Weiterbewegung des Ventilschließkörpers immer in die gleiche Richtung. Erfindungsgemäß ist vorgesehen, dass die Weiterschalteinrichtung derart ausgebildet ist, dass der Ventilschließkörper zunächst von dem Ventilsitz abgehoben, anschließend in Richtung auf die nächste mögliche Position bewegt und wieder auf den Ventilsitz abgesenkt wird.

Erfindungsgemäß weist der Ventilsitz eine zu einem Auslass aus dem Ventilgehäuse führende Durchgangsöffnung auf. Die Durchgangsöffnung des Ventilsitzes kann durch den Ventilschließkörper geöffnet oder geschlossen werden. Bei mehreren voneinander getrennten Auslässen aus dem Gehäuse kann dementsprechend der Ventilsitz für jeden Auslass eine Öffnung aufweisen.

Erfindungsgemäß ist weiter vorgesehen, dass der Ventilschließkörper in Richtung auf den Ventilsitz beaufschlagt ist. Durch Auswahl der Feder lässt sich die Kraft, mit der der Ventilschließkörper beaufschlagt wird, einstellen.

Erfindungsgemäß kann in Weiterbildung vorgesehen sein, dass der Ventilschließkörper eine Durchgangsöffnung aufweist, die in einer der möglichen stabilen Positionen mit der Durchgangsöffnung in dem Ventilsitz in Übereinstimmung steht. In einer zweiten möglichen stabilen Position gibt es keine derartige Übereinstimmung, so dass die Öffnung in dem Ventilsitz geschlossen ist.

In Weiterbildung der Erfindung kann dann, wenn das Ventil mehrere getrennte Auslässe aufweist, das Ventil derart ausgebildet sein, dass es jeden der Auslässe für sich öffnen und schließen kann, aber auch Kombinationen aus mindestens zwei Auslässen gemeinsam öffnen kann. Damit soll erreicht werden, dass beispielsweise zwei Auslässe aus einer Sanitärarmatur gemeinsam geöffnet sind.

Die Weiterschalteinrichtung kann in Weiterbildung der Erfindung derart ausgebildet sein, dass sie den Ventilschließkörper durch das Zusammenwirken von Schrägflächen weiter bewegt. In diesem Fall ist eine Umschaltung zwischen mehreren Auslässen beziehungsweise das Abschalten des gegebenenfalls einzigen Auslasses auch dann möglich, wenn kein Wasser fließt. Der Benutzer kann daher beispielsweise schon vor dem Öffnen eines vorgeschalteten Mengenventils den Auslass bestimmen.

Es ist aber ebenfalls möglich und wird von der Erfindung vorgeschlagen, dass die Weiterschalteinrichtung zum Weiterschalten des Ventilschließkörpers auch die Wasserströmung benutzt. Dies kann so ausgestaltet sein, dass zunächst durch Betätigen des Betätigungselements der Ventilschließkörper aus seiner stabilen Position heraus bewegt und anschließend die Wasserströmung dazu verwendet wird, den Ventilschließkörper in die nächste mögliche stabile Position zu bewegen. Hierzu kann das Ventil eine Turbine aufweisen, die an den Ventilschließkörper angreift. Insbesondere kann diese Turbine direkt an dem Ventilschließkörper angeordnet sein.

Um die verschiedenen möglichen stabilen Positionen des Ventilschließkörpers genau zu definieren, kann erfindungsgemäß vorgesehen sein, dass diese durch das Eingreifen von Vorsprüngen in Ausnehmungen definiert sind. An diesen Vorsprüngen und an den die Ausnehmungen begrenzenden Formationen des Ventils können auch Schrägflächen angeordnet sein, die das Weiterschalten beziehungsweise Weiterbewegen des Ventilschließkörpers bewirken.

Die Weiterbewegung des Ventilschließkörpers kann gegebenenfalls eine hin- und hergehende Bewegung des Ventilschließkörpers sein. Die Erfindung schlägt aber als Weiterbildung vor, dass die Weiterbewegung des Ventilschließkörpers immer in die gleiche Richtung erfolgt.

Erfindungsgemäß kann in Weiterbildung vorgesehen sein, dass der Ventilschließkörper als Plattenelement ausgebildet ist, das mit einer Trennwand im Ventilgehäuse zusammenwirkt. In dieser Trennwand sind dann die Durchgangsöffnungen ausgebildet, die zu den Auslässen führen. Dabei kann auch vorgesehen sein, dass stromab der Trennwand zwischen dieser und den Auslässen jeweils Kammern gebildet sind, aus denen die Auslässe herausführen.

Die Betätigung der Weiterschalteinrichtung kann insbesondere in vorteilhafter Weise eine Druckknopfbetätigung sein.

Weitere Merkmale, Einzelheiten und Vorzüge der Erfindung ergeben sich aus den Ansprüchen, deren Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: perspektivisch die Ansicht eines als Einsatz für eine Armatur bestimmten Ventilsitz nach der Erfindung;
- Figur 2: perspektivisch einige Teile des Ventils der Figur 1;
- Figur 3: einen Axialschnitt durch das Ventil der Figuren 1 und 2;
- Figur 4: eine Stirnansicht einer Trennwand in dem Ventilgehäuse;
- Figur 5: eine Draufsicht auf den Ventilschließkörper des Ventils;
- Figur 6: vereinfacht ein Schema zur Darstellung der Weiterschalteinrichtung;
- Figur 7: die Einzelteile eines Ventils einer zweiten Ausführungsform;
- Figur 8: einen Axialschnitt durch das Ventil der Figur 7;
- Figur 9: eine Ansicht einer Trennwand in dem Ventilgehäuse ähnlich wie Figur 4;
- Figur 10: die Ansicht des Ventilschließkörpers des Ventils der Figur 7;
- Figur 11: die Abwicklung der Bewegung des Ventilschließkörpers bei dem Ventil der Figur 7;
- Figur 12: einen Schnitt durch eine weitere Ausführungsform eines Umschaltventils;
- Figur 13: eine Draufsicht auf das Ventil der Figur 12 bei abgenommenem Deckel;
- Figur 14: eine gegenüber der Figur 5 abgewandelte Ausführungsform eines Ventilschließkörpers.

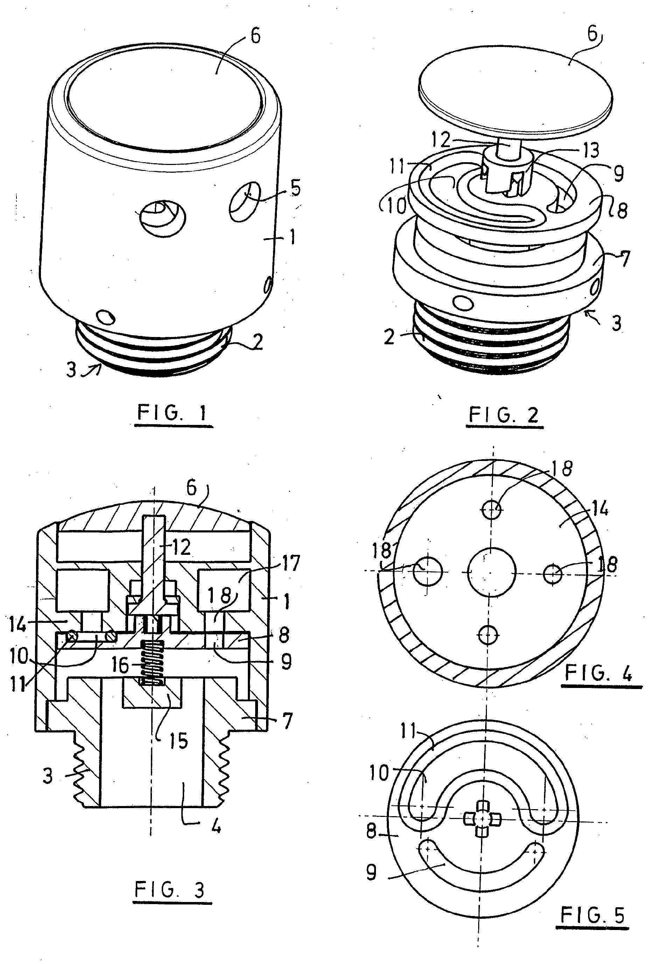

Das als Einsatz für eine Sanitärarmatur ausgebildete Ventil der Figur 1 enthält ein Ventilgehäuse 1 in Form eines Zylinders. An der Unterseite ist ein Ansatz 3 mit einem Außengewinde 2 ausgebildet, mit dessen Hilfe das Ventil als Einsatz in eine Sanitärarmatur oder in das Gehäuse einer Handbrause eingeschraubt werden kann. Das innere des Ansatzes 3 bildet den Einlass für das durch das Ventil zu verteilende Wasser mit einem Durchgang 4. In der Mantelfläche des Ventilgehäuses 1 münden zwei Auslassöffnungen 5, zwischen denen mithilfe des Ventils umgeschaltet werden soll. Beispielsweise ist eine Auslassöffnung 5 für den Auslauf einer Wanne und eine andere Auslassöffnung 5 für eine Brause bestimmt. Den oberen Abschluss des Gehäuses 1 bildet eine Platte 6 eines Druckknopfs, die leicht gewölbt ausgebildet ist und mit einem geringen Spalt innerhalb des oberen Endes des Gehäuses 1 angeordnet ist.

Die Figur 2 zeigt das Ventil der Figur 1 ohne das Ventilgehäuse 1. Der das Gewinde zwei aufweisende Ansatz 3 enthält einen Flansch 7, der beim Einsetzen des Ansatzes 3 in das Gehäuse 1 mit dem unteren Rand des Gehäuses 1 verbunden wird.

In dem Gehäuse ist als weiteres Element ein Ventilschließkörper 8 angeordnet, der als kreisrunde ebene Platte ausgebildet ist und eine bogenförmige Durchgangsöffnung 9 aufweist. Auf der der Durchgangsöffnung 9 gegenüberliegenden Seite ist eine Vertiefung 10 ausgebildet, deren Rand eine Dichtung 11 aufweist. Die hier an dem Ventilschließkörper angebrachte Dichtung 11 kann alternativ auch an dem Gehäuse beziehungsweise der Zwischenwand 14 angeordnet sein.

Als weiteres Element ist in dem Gehäuse 1 der Druckknopf mit der Platte 6 angeordnet. An der Unterseite der Platte 6 ist ein Schaft 12 angeordnet, der mehrere Vorsprünge 24 aufweist. Auf dem Schaft 12 ist eine Nabe 13 begrenzt verschiebbar gelagert, die Vorsprünge und zwischen den Vorsprüngen Ausnehmungen aufweist, wobei die unteren Enden der Vorsprünge Schrägflächen enthalten.

Die Figur 3 zeigt den Axialschnitt durch das Ventil. In dem Ventilgehäuse eins ist eine Zwischenwand 14 einstückig angeformt, an deren in Figur 3 nach unten gerichteten Seite der Ventilschließkörper acht anliegt. In der Mitte des Ansatzes 3 ist eine Nabe 15 ausgebildet, die an ihrer dem Ventilkörper acht zugewandten Seite eine Vertiefung aufweist. Hier ist eine Druckfeder 16 eingesetzt, die den Ventilschließkörper 8 gegen die Trennwand 14 andrückt. Der Außendurchmesser des Ventilschließkörpers acht entspricht etwa dem Innendurchmesser des Ventilgehäuses.

Auf der dem Ventilschließkörper 8 abgewandten Seite der Trennwand 14 sind zwei Kammern 17 gebildet, von denen jede Kammer 17 mit einem Auslass 5 in Fluidverbindung steht. In jede Kammer 17 führt mindestens eine Durchgangsöffnung 18 der Trennwand 14. In der in Figur 3 dargestellten Position ist die Position der Öffnung 9 des Ventilschließkörpers 8 derart, dass eine Übereinstimmung mit der Durchgangsöffnung 18 gegeben ist, die in eine der beiden Kammern 17 führt. Dies bedeutet, dass das Wasser jetzt in die in Figur 3 rechte Kammer 17 und von dort aus durch einen der beiden Auslässe 5 fließen kann.

Figur 4 zeigt in einem Querschnitt durch das Ventilgehäuse 1 die Ansicht der Trennwand 14 mit mehreren Durchgangsöffnungen 18.

Die Figur 5 zeigt die Draufsicht auf den Ventilschließkörper 8, also von oben in Figur 2. Wenn man den Ventilschließkörper auf die Trennwand 14 liegt, so kann man erkennen, dass es möglich ist, Kombinationen von Durchgangsöffnungen 18 mit der Durchgangsöffnung 9 in Übereinstimmung zu bringen. Da jeweils zwei der Durchgangsöffnungen 18 mit einer Kammer 17 und damit mit einem Auslass 5 in Verbindung stehen, können daher die beiden Auslässe 5 sowohl gemeinsam als auch getrennt angesteuert werden.

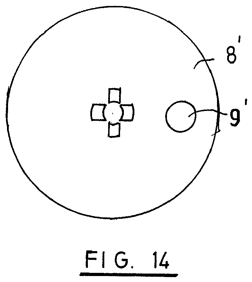

Es ist auch möglich, dass der Ventilschließkörper in Form der Scheibe 8' nur eine einzige Öffnung 9' aufweist, beispielsweise ein kreisrundes Loch. Es wird hierzu auf die Figur 14 verwiesen. Diese einzige Öffnung 9' kann wahlweise in Deckung mit einer oder auch mit keiner Durchgangsöffnung 18 in der Trennwand 14 gebracht werden. Dadurch lassen sich Absperrstellungen verwirklichen. Im Falle von kleinen Verstellschritten der Weiterschalteinrichtung zum Beispiel durch kleinere Teilung oder entsprechende Lochformen können auch Teilöffnungen eines Lochs hergestellt werden.

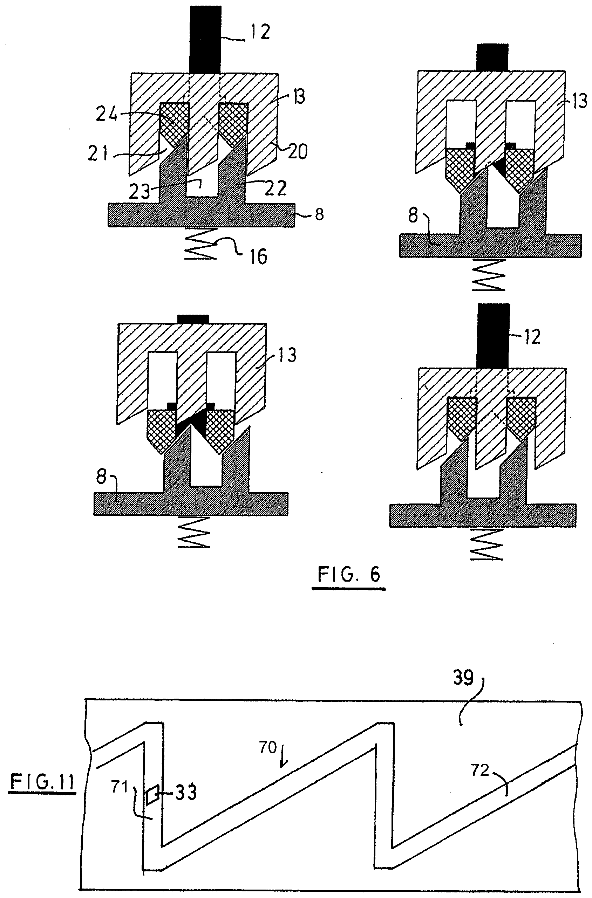

Die Art der Bewegung des Ventilschließkörpers 8 wird jetzt anhand der schematischen Figur 6 erläutert. An dem Fuß 13, der ortsfest in dem Gehäuse angeordnet ist, sind nach unten gerichtete Zapfen 20 und zwischen den Zapfen gebildete Zwischenräume 21 ausgebildet. An der Oberseite des Ventilschließkörpers 8 sind ebenfalls zapfenartige Vorsprünge 22 mit Zwischenräumen zwischen diesen gebildet. Die oberen Enden der Zapfen 22 des Ventilschließkörpers 8 verlaufen schräg, ebenso die unteren Enden der Vorsprünge 20 des Fußes 13. In den Ausnehmungen 21 sind doppelkeilförmige Formationen 24 geführt, die mit dem Schaft 12 des Druckknopfs in Verbindung stehen. Wird der Druckknopf aus der Position links oben in Figur 6 nach unten gedrückt, wird der Ventilschließkörper 8 ebenfalls gegen die Wirkung der Feder 16 nach unten gedrückt. Sobald die Spitze seiner Vorsprünge 22 an den Spitzen der Vorsprünge 20 vorbei gelangt ist, schieben die Formationen 24 die Zapfen 22 nach rechts. Lässt man anschließend den Druckknopf wieder los, so schiebt die Feder 16 über die Vorsprünge 22 des Ventilschließkörpers 8 die Formationen 24 und damit den Druckknopf wieder in die Ausgangsposition, aber in einer Position, bei der jeder Vorsprung 22 jeweils in dem nächsten Zwischenraum 21 angeordnet ist. Diese verschiedenen Stadien sind in den vier Einzeldarstellungen der Figur 6 dargestellt. Solche Weiterschalteinrichtungen sind an sich in vielen Anwendungsfällen bekannt.

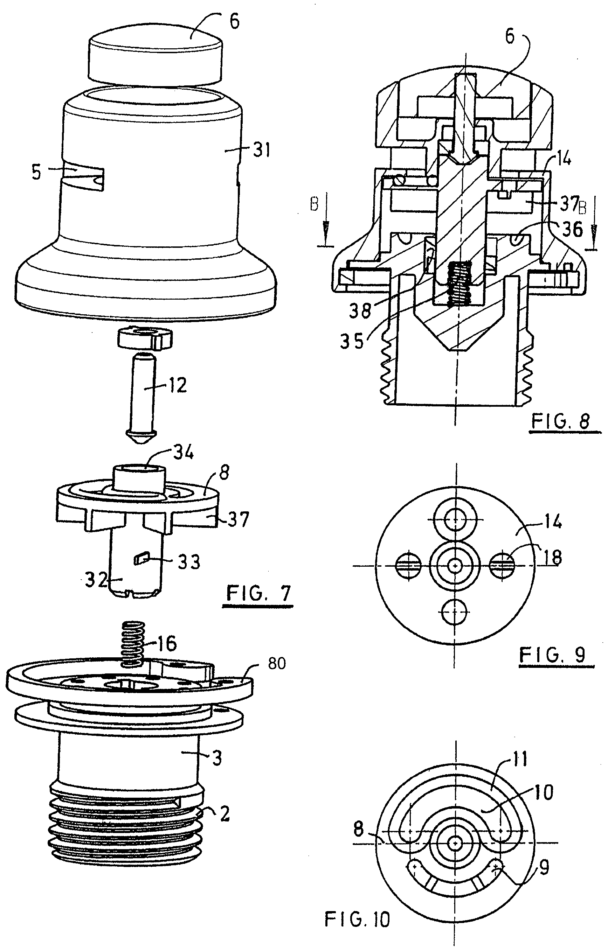

Das in den folgenden Figuren dargestellte Ventil ist ähnlich aufgebaut, wobei seine Außenform geringfügig anders ausgebildet ist. In dem Gehäuse 31 sind als Auslassöffnungen 5 zwei Schlitze ausgebildet, die diametral gegenüber liegend angeordnet sind. Zum Betätigen dient wieder ein Druckknopf mit einer Platte 6, die am oberen Ende des Gehäuses 31 angeordnet ist. Der Ventilschließkörper 8 weist an seiner Oberseite die gleiche Form auf wie der Ventilschließkörper 8 der Figur 5. Mittig enthält der Ventilschließkörper diesmal aber einen Schaft 32 mit einem Nocken 33 an seiner Außenseite. Der Schaft 32 weist an seiner in Figur 7 nach oben gerichteten Stirnseite eine Vertiefung 34 auf, ebenso an seiner Unterseite eine Vertiefung 35. In die Vertiefung 35 greift die Druckfeder 16 ein. In die Vertiefung 34 an der Oberseite greift der Schaft 12 des Betätigungsknopfes ein.

Zur Festlegung des Ansatzes 3 in dem Gehäuse 31 dient ein Sprengring 36, der in Figur 17 dargestellt ist.

In zusammengesetzten Zustand drückt die in einer Nabe des Ansatzes 3 gehaltene Druckfeder 16 den Schaft 32 und damit den Ventilschließkörper 8 gegen die Unterseite der Trennwand 14, so dass die Ventilpositionen ähnlich sind wie bei der vorhergehenden Ausführungsform. Der Ansatz 3 weist bei dieser Ausführungsform keinen vollständig durchgehenden Durchgang auf, sondern ist an seinem in das Innere des Ventilgehäuses 31 gerichteten Ende mit einer Platte versehen, durch die hindurch Kanäle führen, deren Ausgänge 36 in Figur 8 angedeutet sind. Diese Kanäle münden schräg zur Stirnfläche aus.

An der Unterseite der die Öffnungen 9 aufweisenden Platte des Ventilschließkörpers 8 sind radial verlaufende Flügel 37 angeordnet, die dadurch eine Turbine bilden. Die schräg ausmündenden Kanäle erzeugen eine Wasserströmung, die auf die Flügel 37 der Turbine treffen.

Der an der Außenseite des Schafts 32 des Ventilschließkörpers 8 gebildete Nocken 33 wird in einer Nut an der Wand eines den Schaft 32 umgebenden Raumes 38 in dem Ansatz 3 geführt. Eine Abwicklung der Wand 39 dieses Raumes 38 ist in Figur 11 dargestellt. Die Nut 40 weist in axialer Richtung verlaufende Abschnitte 41 und/verlaufende Abschnitte 42 auf. Die Orientierung der Abwicklung in Figur 11 entspricht der Darstellung der Figur 8. Dies bedeutet, dass dort, wo in Figur 8 oben ist, auch in Figur 11 oben ist. In der Nut 40 ist der Nocken 33 geführt. Drückt man auf den Betätigungsknopf mithilfe der Platte sechs, so wird gegen die Wirkung der Feder 16 der Ventilschließkörper 8 nach unten geschoben, wobei er sich zunächst nur axial bewegen kann, da der Nocken 38 in dem axialen Teil 41 der Nut 40 geführt ist. Gleichzeitig wirkt aber die Wasserströmung, die aus den Ausnehmungen 36 der Kanäle schräg heraus führt, auf die Flügel 37 der Turbine ein. Sobald der Nocken 33 das untere Ende des axialen Abschnitts 41 der Nut 40 erreicht hat, wirkt die Wasserströmung in der Weise, dass der Ventilschließkörper 8 verdreht wird. Dabei wird der Nocken 33 in dem schrägen Teil 42 der Nut 40 geführt, bis er das obere Ende des schräg verlaufenden Teils 42 erreicht hat. Dies ist die nächste stabile Position des Ventilschließkörpers 8, in der er stehen bleibt.

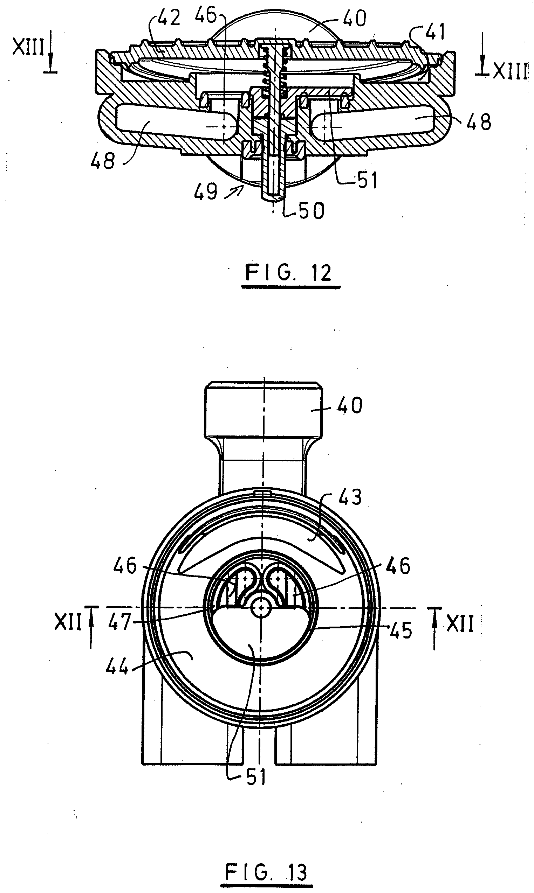

Figur 12 zeigt nun einen der Figur 3 und der Figur 8 entsprechenden Schnitt durch eine weitere Ausführungsform eines von der Erfindung vorgeschlagenen Sanitärventils. Dieses Sanitärventil weist einen in Figur 13 oben dargestellten Einlass 40 auf, der in Figur 12 hinten ebenfalls zu sehen ist. Der Einlass 40 führt in den Innenraum 41 des Ventilgehäuses. Dieser Innenraum 41 ist nach oben in Figur 12 durch einen Deckel 42 abgeschlossen.

Unmittelbar hinter dem Einlass 40 ist in dem Ventilgehäuse ein sichelförmiger Einlassraum 43 gebildet, siehe Figur 13, der bis auf einen Boden des Ventilgehäuses reicht. Der bereits angesprochenen Innenraum 41 weist einen Kreisringboden 44 auf, der nach innen durch eine Randschürze 45 begrenzt ist. Innerhalb dieser sich längs eines Zylinders erstreckenden Randschürze 45 ist eine Vertiefung ausgebildet, in deren Boden zwei bogenförmige Durchgangsöffnungen 46 ausgebildet sind. Beide Durchgangsöffnungen 46 sind von einer Dichtung 47 umgeben. Jede der beiden Durchgangsöffnungen 46 führt in einen eigenen Auslasskanal 48, der im Querschnitt in Figur 12 zu sehen ist. Figur 13 zeigt, wie die Auslasskanäle aus dem Ventilgehäuse herausragen.

Konzentrisch in der Vertiefung innerhalb der Randschürze 45 ist die Weiterschalteinrichtung 49 angeordnet, die in ähnlicher Weise arbeitet wie bei den vorhergehenden Ausführungsformen. Ein Druck auf das Betätigungselement in Form eines Stifts 50, unten in Figur 12, schaltet eine Ventilplatte 51 weiter, deren Form etwa der Form der beiden Durchgangsöffnungen 46 entspricht. In der Darstellung der Figur 12 ist eine der beiden Durchgangsöffnungen 46 durch die Ventilplatte 51 abgedeckt und damit verschlossen, während die links in Figur 12 angeordnete Durchgangsöffnung 46 geöffnet ist. Die Weiterschalteinrichtung ist so ausgebildet, dass sie die Ventilplatte 51 jeweils um 90° weiter schaltet. Figur 13 zeigt die Ventilplatte 41 in einem Zustand, wo jede der beiden Durchgangsöffnungen 46 zur Hälfte geöffnet und zur Hälfte verschlossen ist. Bei einem Weiterschalten, was immer in der gleichen Richtung erfolgt, wird dann im nächsten Zustand eine der beiden Durchgangsöffnungen 46 vollständig geschlossen, während die andere vollständig geöffnet ist.

Anhand der Figur 13 lassen sich die möglichen Arten der Weiterschaltung des Ventilschließkörpers in Form der Ventilplatte 51 erläutern. Es gibt zwei Durchgangsöffnungen entsprechend zwei Auslässen aus dem Ventilgehäuse. Der Ventilschließkörper kann im einfachsten Fall zwei möglich Stellungen aufweisen, wobei in jeder Position eine Durchgangsöffnung vollständig geöffnet und eine Durchgangsöffnung vollständig geschlossen ist. Im dargestellten Beispiel hat der Ventilschließkörper vier Positionen, wobei für jede Durchgangsöffnung eine vollständig geöffnete, eine halbgeöffnete und eine vollständig geschlossene Stellung gegeben ist. Es wäre auch möglich, die Weiterschalteinrichtung derart auszubilden, dass die Ventilplatte 51 um jeweils 45° weiter geschaltet wird. Bei einer anderen Anordnung der Durchgangsöffnungen ist es auch denkbar, dass ein Ventilschließkörper eine Position aufweist, in der beide Durchgangsöffnungen geschlossen sind. Ebenfalls möglich ist es, dass der Ventilschließkörper eine Position aufweisen kann, in der beide Durchgangsöffnungen vollständig geöffnet sind.

Ein Umschaltventil wird vorgeschlagen, das mithilfe eines Ventilschließkörpers und eines Ventilsitzes zwischen mindestens zwei verschiedenen Auslässen umschaltet. Das Ventil enthält eine Betätigungseinrichtung, die von dem Benutzer betätigt werden kann. Die Betätigungseinrichtung wirkt auf einer Weiterschalteinrichtung, die den Ventilschließkörper von einer stabilen diskreten Position in eine andere stabile diskrete Position weiterschaltet. Das Weiterschalten kann entweder durch das Zusammenwirken von Schrägflächen oder mithilfe der Wasserströmung geschehen.

## Patentansprüche

1. Sanitäres Abschalt- beziehungsweise Umschaltventil mit
- einem Ventilgehäuse (1, 31),
- einem Einlass (4, 40) in das Ventilgehäuse (1,31),
- mindestens einem Auslass (5, 48) aus dem Ventilgehäuse (1, 31),
- einem zwischen dem Einlass (4, 40) in das Ventilgehäuse (1, 31) und dem Auslass (5, 48) aus dem Ventilgehäuse (1, 31) wirksamen Ventil, das einen Ventilsitz und einen Ventilschließkörper (8, 51) mit diskreten stabilen Positionen aufweist,
- einer Weiterschalteinrichtung zum schrittweisen Bewegen des Ventilschließkörpers (8,51) zwischen den stabilen Positionen und
- einer manuellen Betätigungseinrichtung mit einem Druckknopf für die Weiterschalteinrichtung,
- wobei der Ventilsitz eine zu dem Auslass (5, 48) aus dem Gehäuse (1, 31) führende Durchgangsöffnung (18, 46) aufweist, bei mehreren Auslässen für jeden Auslass (5, 48) mindestens eine Durchgangsöffnung (18, 46),
- wobei der Ventilschließkörper (8, 51) in Richtung auf den Ventilsitz entgegen der Hubbewegung federbeaufschlagt ist und
- wobei sich die Bewegung des Ventilschließkörpers (8, 51) aus einer Hubbewegung und einer hierzu quer verlaufenden Drehbewegung gegenüber dem Ventilsitz zusammensetzt, wobei die diskreten stabilen Positionen des Ventilschließkörpers (8, 51) unterschiedlichen Drehwinkelstellungen des Ventilschließkörpers entsprechen, wobei der Ventilschließkörper (8, 51) zunächst vom Ventilsitz abgehoben und anschließend in Richtung auf die nächste diskrete stabile Position gedreht und wieder auf den Ventilsitz abgesenkt wird.

2. Ventil nach Anspruch 1, bei dem der Ventilschließkörper (8, 51) mindestens eine mit der Öffnung (18) in dem Ventilsitz in Übereinstimmung zu bringende Durchgangsöffnung (9) aufweist.

3. Ventil nach einem der vorhergehenden Ansprüche, bei dem bei mehreren Auslassöffnungen (5, 48) das Ventil derart ausgebildet ist, dass es jede der Auslassöffnungen (5, 48) getrennt und Kombinationen mindestens zweier Auslassöffnungen (5, 48) gemeinsam öffnet.

4. Ventil nach einem der vorhergehenden Ansprüche, bei dem die Weiterschalteinrichtung dafür ausgebildet ist, den Ventilschließkörper (8, 51) durch Zusammenwirken von Schrägflächen weiterzudrehen.

5. Ventil nach einem der vorhergehenden Ansprüche, bei dem die Weiterschalteinrichtung dafür ausgebildet ist, den Ventilschließkörper (8, 51) durch Wasserströmung weiterzudrehen.

6. Ventil nach einem der vorhergehenden Ansprüche, bei dem der Ventilschließkörper (8, 51) Turbinenflügel (37) zur Bildung einer Turbine aufweist.

7. Ventil nach einem der vorhergehenden Ansprüche, bei dem die diskreten stabilen Positionen des Ventilschließkörpers (8, 51) durch ein Eingreifen von Vorsprüngen in Ausnehmungen definiert sind.

8. Ventil nach einem der vorhergehenden Ansprüche, bei dem die Weiterschalteinrichtung dafür ausgebildet ist, den Ventilschließkörper (8, 51) immer in der gleichen Richtung weiterzudrehen.

9. Ventil nach einem der vorhergehenden Ansprüche, bei dem der Ventilschließkörper (8) eine ebene Platte aufweist, die mit einer Trennwand (14) im Ventilgehäuse (1, 31) zusammenwirkt.

10. Ventil nach einem der vorhergehenden Ansprüche, bei dem der mindestens eine Auslass (5) aus dem Gehäuse (1) aus einer in dem Gehäuse gebildeten Kammer (17) erfolgt.

11. Ventil nach einem der vorhergehenden Ansprüche, bei dem die Weiterschalteinrichtung dafür ausgebildet ist, Zwischenpositionen des Ventilschließkörpers (8, 51) zum teilweisen Öffnen und Schließen von Auslässen (5, 48) und/oder zum Öffnen mehrerer Auslässe (5, 48) und/oder zum Schließen aller Auslässe (5, 48) zu ermöglichen.

## Claims

1. Sanitary shutoff and/or switching valve comprising
- a valve housing (1, 31),
- an inlet (4, 40) leading into the valve housing (1, 31),
- at least one outlet (5, 48) leading out of the valve housing (1, 31),
- a valve that acts between the inlet (4, 40) into the valve housing (1, 31) and the outlet (5, 48) out of the valve housing (1, 31), the valve having a valve seat and a valve closing body (8, 51) which has discrete, stable positions,
- an advancing device for stepwise moving the valve closing body (8, 51) between the stable positions, and
- a manual actuating device including a push button for the advancing device,
- wherein the valve seat has a passage (18, 46) leading to the outlet (5, 48) out of the housing (1, 31), specifically at least one passage (18, 46) for each outlet (5, 48) when there are a plurality of outlets,
- wherein the valve closing body (8, 51) is spring-loaded in the direction toward the valve seat counter to a lifting movement, and
- wherein the movement of the valve closing body (8, 51) is composed of the lifting movement and, extending transversely in relation thereto, a rotary movement relative to the valve seat, wherein the discrete, stable positions of the valve closing body (8, 51) correspond to different rotation angle positions of the valve closing body, wherein the valve closing body (8, 51) is firstly lifted from the valve seat and subsequently rotated in the direction toward the next discrete, stable position and again lowered onto the valve seat.

2. Valve according to claim 1, wherein the valve closing body (8, 51) comprises at least one passage (9) to be brought into alignment with the opening (18) in the valve seat.

3. Valve according to anyone of the preceding claims, wherein, when there is a plurality of outlet openings (5, 48), the valve is designed such that it opens each of the outlet openings (5, 48) separately and combinations of at least two outlet openings (5, 48) in common.

4. Valve according to anyone of the preceding claims, wherein the advancing device is designed to advance the valve closing body (8, 51) in rotation via the interaction of beveled surfaces.

5. Valve according to anyone of the preceding claims, wherein the advancing device is designed to advance the valve closing body (8, 51) in rotation by flow of water.

6. Valve according to anyone of the preceding claims, wherein the valve closing body (8, 51) has turbine vanes (37) for forming a turbine.

7. Valve according to anyone of the preceding claims, wherein the discrete, stable positions of the valve closing body (8, 51) are defined by engagement of protrusions in recesses.

8. Valve according to anyone of the preceding claims, wherein the advancing device is designed to advance the valve closing body (8, 51) by rotating always in the same direction.

9. Valve according to anyone of the preceding claims, wherein the valve closing body (8) has a flat plate that interacts with a partition wall (14) in the valve housing (1, 31).

10. Valve according to anyone of the preceding claims, wherein the at least one outlet (5) out of the housing (1) leads out of a chamber (17) formed in the housing.

11. Valve according to anyone of the preceding claims, wherein the advancing device is designed to enable intermediate positions of the valve closing body (8, 51) for partial opening and closing of outlets (5, 48) and/or for opening a plurality of outlets (5, 48) and/or for closing all outlets (5, 48).

## Revendications

1. Valve d'arrêt ou d'inversion sanitaire, comportant
- un boîtier de valve (1, 31),
- une entrée (4, 40) dans le boîtier de valve (1, 31),
- au moins une sortie (5, 48) hors du boîtier de valve (1, 31),
- une valve qui agit entre l'entrée (4, 40) dans le boîtier de valve (1, 31) et la sortie (5, 48) hors du boîtier de valve (1, 31) et qui comprend un siège de valve et un corps de fermeture de valve (8, 51) avec des positions stables discrètes,
- un moyen de commutation progressive pour le déplacement pas à pas du corps de fermeture de valve (8, 51) entre les positions stables, et
- un moyen d'actionnement manuel pourvu d'un bouton-poussoir pour le moyen de commutation progressive,
dans laquelle
- le siège de valve comprend une ouverture traversante (18, 46) menant vers la sortie (5, 48) hors du boîtier (1, 31) et, dans le cas de plusieurs sorties, il comprend au moins une ouverture traversante (18, 46) pour chaque sortie (5, 48),
- le corps de fermeture de valve (8, 51) est sollicité élastiquement en direction du siège de valve à l'encontre du mouvement de soulèvement, et
- le mouvement du corps de fermeture de valve (8, 51) se compose d'un mouvement de soulèvement et d'un mouvement de rotation transversal à celui-ci par rapport au siège de valve, les positions stables discrètes du corps de fermeture de valve (8, 51) correspondant à différentes positions angulaires de rotation du corps de fermeture de valve, le corps de fermeture de valve (8, 51) étant tout d'abord soulevé du siège de valve et étant ensuite tourné en direction de la prochaine position stabile discrète et étant abaissé sur le siège de valve.

2. Valve selon la revendication 1, dans lequel le corps de fermeture de valve (8, 51) présente au moins une ouverture traversante (9) à amener en coïncidence avec l'ouverture (18) dans le siège de valve.

3. Valve selon l'une des revendications précédentes, dans laquelle, dans le cas de plusieurs ouvertures de sortie (5, 48), la valve est réalisée de manière à ouvrir séparément chacune des ouvertures de sortie (5, 48) et à ouvrir conjointement des combinaisons d'au moins deux ouvertures de sortie (5, 48).

4. Valve selon l'une des revendications précédentes, dans laquelle le moyen de commutation progressive est réalisé pour continuer à tourner le corps de fermeture de valve (8, 51) par coopération de surfaces obliques.

5. Valve selon l'une des revendications précédentes, dans laquelle le moyen de commutation progressive est réalisé pour faire tourner le corps de fermeture de valve (8, 51) par écoulement d'eau.

6. Valve selon l'une des revendications précédentes, dans laquelle le corps de fermeture de valve (8, 51) comprend des pales de turbine (37) pour former une turbine.

7. Valve selon l'une des revendications précédentes, dans laquelle les positions stables discrètes du corps de fermeture de valve (8, 51) sont définies par l'engagement de saillies dans des évidements.

8. Valve selon l'une des revendications précédentes, dans laquelle le moyen de commutation progressive est réalisé pour faire tourner le corps de fermeture de valve (8, 51) toujours dans la même direction.

9. Valve selon l'une des revendications précédentes, dans laquelle le corps de fermeture de valve (8) comprend une plaque plane qui coopère avec une cloison de séparation (14) dans le boîtier de valve (1, 31).

10. Valve selon l'une des revendications précédentes, dans laquelle ladite au moins une sortie (5) hors du boîtier (1) est réalisée par une chambre (17) formée dans le boîtier.

11. Valve selon l'une des revendications précédentes, dans laquelle le moyen de commutation progressive est réalisé pour permettre des positions intermédiaires du corps de fermeture de valve (8, 51) en vue d'une ouverture et fermeture partielle de sorties (5, 48) et/ou en vue d'une ouverture de plusieurs sorties (5, 48) et/ou en vue d'une fermeture de toutes les sorties (5, 48).
